# EUROPÄISCHE PATENTSCHRIFT

(11) **EP 3 754 217 B1**
(45) Veröffentlichungstag und Bekanntmachung des Hinweises auf die Patenterteilung: **01.12.2021**
(21) Anmeldenummer: 20189536.4
(22) Anmeldetag: 06.04.2018
(51) Int. Cl.: F16C 35/077, F16C 19/52, F16C 27/06, F04D 29/059, F04D 29/42

(54) **GEBLÄSE MIT GEBLÄSEGEHÄUSETEILEN MIT LAGERAUFNAHME**
BLOWER WITH BLOWER HOUSING PARTS WITH BEARING SUPPORT
VENTILATEUR AVEC PARTIES DE BOÎTIER DE VENTILATEUR DOTÉES DE LOGEMENT DE PALIER

(30) Priorität: 13.06.2017 DE 102017112983
(43) Veröffentlichungstag der Anmeldung: 23.12.2020
(62) Teilanmeldung aus: 18166056.4
(73) Patentinhaber: ebm-papst Mulfingen GmbH & Co. KG, 74673 Mulfingen (DE)
(72) Erfinder: MÜLLER, Rainer, 74639 Zweiflingen-Pfahlbach (DE); HENNEGRIFF, Matthias, 74747 Ravenstein (DE); HÄFNER, Jochen, 74572 Blaufelden (DE); FUCHS, Michael, 74653 Künzelsau (DE)
(74) Vertreter: Staeger & Sperling Partnerschaftsgesellschaft mbB

(56) Entgegenhaltungen:
- EP-A1- 2 466 147
- WO-A1-2016/194697
- WO-A1-2016/199822
- DE-A1-102013 204 085
- DE-A1-102013 204 136
- DE-C1- 19 950 245
- DE-T2- 60 130 090
- US-A- 2 936 947
- US-A1- 2016 177 957

## Beschreibung

Die Erfindung betrifft ein Gebläse mit einem Gebläsegehäuse aus zwei miteinander verbundenen Gebläsegehäuseteilen.

Bei Gebläsen werden Gebläsegehäuse mit unterschiedlichen Konstruktionen eingesetzt. Beispielsweise werden mehrteilige Gebläsegehäuse verwendet, die einen Gehäusehauptkörper und eine Seitenteil, d.h. eine Art Deckel aufweisen. Auch sind Gebläsegehäuse bekannt, die aus mehreren Gebläsegehäuseteilen zusammengesetzt werden, wobei jedes der Gebläsegehäuseteile eine unterschiedliche Form aufweist und einen unterschiedlichen Anteil an dem Gesamtgehäuse bildet. Dabei ist nachteilig, dass die Montage und Demontage aufwendig ist. Ferner ist problematisch, eine ausreichende Lagerung und Abstützung des Gebläsemotors bereitzustellen. Bei unterschiedlich großen Gebläsegehäuseteilen ist es zudem nötig, eine jeweils ausreichende mechanische Festigkeit zu gewährleisten. Dies führt bei den im Verhältnis kleineren Teilen zu einer erhöhten Wandstärke und mithin größerer Versperrung für den zu fördernden Luftstrom.

Gebläse im vorliegenden technischen Gebiet sind beispielsweise aus den Dokumenten WO 2016/194 697 A1, US 2 936 947 A, DE 601 30 090 T2, WO 2016/199822 A1, DE 10 2013 204 136 A1, DE 199 50 245 C1, DE 20 53 523 A1 und US 2016 / 177 957 A1 bekannt.

Der Erfindung liegt die Aufgabe zugrunde, ein ein Gebläse bereitzustellen, welche die bisherigen Nachteile überwinden und eine ausreichende Lagerung für den Gebläsemotor gewährleisten.

Diese Aufgabe wird durch die Merkmalskombination gemäß Patentanspruch 1 gelöst.

Erfindungsgemäß wird ein Gebläse mit Gebläsegehäuseteilen mit einer Einlassöffnung zur Ansaugung von Gebläseluft und einer in der Einlassöffnung gehaltenen Lageraufnahme zur Lagerung eines Gebläsemotors vorgeschlagen, wobei die Lageraufnahme eine zu einer Gebläsemotorseite offene Lagerbuchse aufweist, die ausgebildet ist, zumindest ein Motorwellenlager des Gebläsemotors aufzunehmen. Als Gebläsemotorseite wird vorliegend die ins Innere weisende Seite des durch das Gebläsegehäuseteil teilweise gebildeten Gebläsegehäuses definiert.

Das Gebläsegehäuseteil bildet mit der Lageraufnahme und der Lagerbuchse eine Lagermöglichkeit für die Motorwelle und mithin für den Motor im Bereich der Einlassöffnung. Bei Verwendung von zwei entsprechenden Gebläsegehäuseteilen kann eine beidseitige Lagerung mit symmetrischer Aufteilung der Abstützkräfte erfolgen, wie es nachstehend näher für das Gebläse beschrieben ist.

In einer Ausführungsvariante des Gebläsegehäuseteils ist vorgesehen, dass die Lageraufnahme über sternförmig die Einlassöffnung überstreckend verlaufende Stege einteilig an dem Gebläsegehäuseteil gehalten ist. Insbesondere eignen sich drei jeweils im 120°-Winkel zueinander beabstandet verlaufende Radialstege, die auf einen um die Rotationsachse des Gebläses gelegenen Zentralbereich auf die Lageraufnahme zulaufen.

Zur Erleichterung der Montage wird bei einer erfindungsgemäßen Ausführung des Gebläsegehäuseteils vorgesehen, dass in der Lagerbuchse konisch zulaufende Rippen ausgebildet sind, welche eine Querschnittsfläche der Lagerbuchse in axialer Richtung verringern. Das Lager der Motorwelle oder die Motorwelle mit bereits daran angeordnetem Lager können leichter in der Lagerbuchse montiert werden, da die Querschnittsfläche der Lagerbuchse im Bereich der offenen Stirnseite größer ist als im Bodenbereich der Lagerbuchse, der axial von ihrer offenen Stirnseite beabstandet ist.

In einer Weiterbildung weist die Lagerbuchse Axialrippen auf, die sich in einen von der Lagerbuchse bestimmten Aufnahmeraum hinein erstrecken. Die axial vorstehenden Axialrippen dienen zum axialen Toleranzausgleich im montierten Zustand der Bauteile.

Ferner wird in einem Ausführungsbeispiel des Gebläsegehäuseteils vorgesehen, dass in der Lagerbuchse ein buchsenförmiges Elastomerelement angeordnet ist. Das buchsenförmige Elastomerelement ist ausgebildet, das Motorwellenlager des Gebläsemotors aufzunehmen und dient zur Schwingungsentkopplung zu den angrenzenden Bauteilen.

Das buchsenförmige Elastomerelement füllt in einer Ausführung die Lagerbuchse im Wesentlichen vollständig aus und liegt an den Innenwänden bzw. gegebenenfalls entsprechend vorgesehenen konisch zulaufenden Rippen an. Das buchsenförmige Elastomerelement bildet einen buchsenförmigen Einsatz, in den das Motowellenlager und die Motorwellenendabschnitt einsetzbar sind.

Eine weiterbildende Ausführung sieht vor, dass das buchsenförmige Elastomerelement Axialrippen aufweist, die sich in einen von dem Elastomerelement bestimmten Aufnahmeraum hinein erstrecken. Teile des Motorwellenlagers können an den Axialrippen anliegen.

In einer Weiterbildung des Gebläsegehäuseteils weist die Lageraufnahme in Richtung des Gebläsemotors eine axiale Durchgangsöffnung zur Durchführung eines Kabels, insbesondere der Anschlussleitung für den Gebläsemotor auf. Ferner wird in einer Ausführung vorgesehen, dass zumindest einer der Stege Führungsmittel zum Führen eines Kabels aufweisen. Zusätzlich oder alternativ können ein oder mehrere der Stege Haltemittel zum Festlegen eines Kabels aufweisen. Die Führungs- und/oder Haltemittel können durch seitliche Randstege gebildet werden, die eine Art Kanal erzeugen, in den das Kabel vollständig einlegbar ist. Zudem können eine oder mehrere jeweils einen Hintergriff bildende Rastnasen oder den Kanal überstreckende Querstege vorgesehen werden, welche das Kabel an dem Steg fixieren.

Als optionale Ausgestaltung weist das Gebläsegehäuseteil ein einstückig daran ausgebildetes Schutzgitter mit Gitterstreben auf, welche die Einlassöffnung überstrecken. Die die Einlassöffnung überstreckend verlaufenden sternförmigen Stege werden in einer Ausführung innerhalb einer Axialebene mit den Gitterstreben des Schutzgitters ausgebildet.

Die Erfindung betrifft das Gebläse, insbesondere ein Radialgebläse, mit einem Gebläsegehäuse, in dem der Gebläsemotor und ein Laufrad aufgenommen sind, wobei das Gebläsegehäuse aus zwei miteinander verbundenen Gebläsegehäuseteilen der vorstehend als erfindungsgemäß beschriebenen Ausgestaltungen gebildet ist. Das Gebläsegehäuse aus zwei miteinander verbundenen Gebläsegehäuseteilen ermöglicht eine einfache und schnelle Montag bei gleichzeitiger Aufnahme des Gebläsemotors bzw. der Baugruppe des Gebläsemotors entkoppelt von dem Gebläsegehäuse. Zudem wird eine beidseitige Lagerung mit jeweils einer Lageraufnahme in jeweils einem Gebläsegehäuseteil gewährleistet.

Eine vorteilhafte Ausgestaltung sieht vor, dass das Gebläsegehäuse axial mittig in einer einzigen Teilungsebene geteilt ist und die zwei Gebläsegehäuseteile jeweils eine Hälfte des Gebläsegehäuses bilden. Dabei können die Gebläsegehäuseteile in einem Ausführungsbeispiel spiegelsymmetrisch ausgebildet werden. Durch die hälftige Teilung können Arbeitsschritte bei der Montage wie eine Vorabmontage des Gebläsemotors in einer Gebläsegehäusehälfte entfallen. Zudem bietet die axial mittige Teilung eine symmetrische Aufteilung der Abstützkräfte an den Lageraufnahmen und führt somit zu einer gleichen Verteilung der benötigten Festigkeit. Die Reduzierung bzw. gleiche Verteilung der aufzunehmenden Abstützkräfte lässt eine Reduzierung der Wandstärken der Gebläsegehäuseteilt zu und minimiert die Versperrung für den von dem Gebläse zu fördernden Luftstrom.

Zudem ist eine Ausführung günstig, bei der die zwei Gebläsegehäuseteile ineinander greifende Befestigungsmittel aufweisen. Derartige Befestigungsmittel können beispielsweise als Verklipselemente, beispielsweise mit Haken- und Ösenteilen ausgebildet sein.

Bei dem Gebläse stellt die Lageraufnahme des ersten der zwei Gebläsegehäuseteile eine Lagerung des Motorwellenlagers des Gebläsemotors und die Lageraufnahmen des zweiten der zwei Gebläsegehäuseteile eine Lagerung und Abstützung, beispielsweise durch einen Einsatz, des Gebläsemotors bereit.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: eine Vorderansicht auf ein Gebläsegehäuse mit zwei getrennten Gebläsegehäuseteilen;
- Fig. 2: eine Seitenansicht auf ein Gebläsegehäuseteil aus Fig. 1;
- Fig. 3: eine aufgeschnittene Detailansicht der Lageraufnahme des Gebläsegehäuses aus Fig. 1 und 2;
- Fig. 4: eine alternative Ausgestaltung des Gebläsegehäuses.

Gleiche Bezugszeichen benennen gleiche Teile in allen Ansichten.

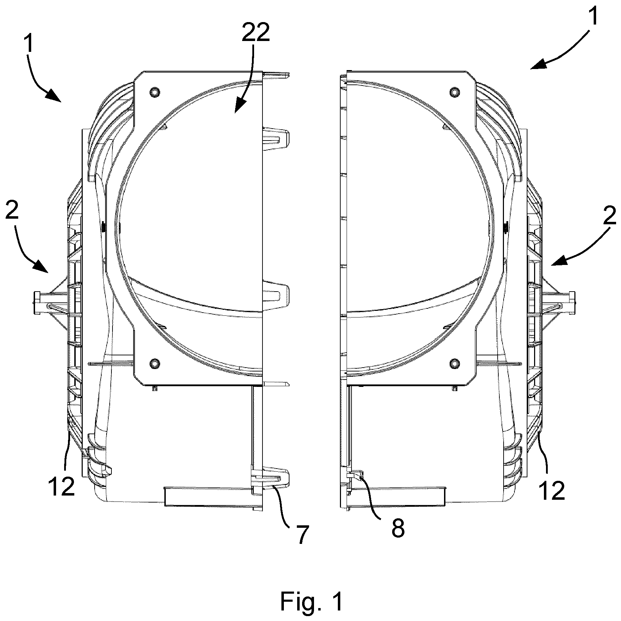

Figur 1 zeigt eine Vorderansicht auf ein Gebläsegehäuse eines Radialgebläses mit zwei getrennten Gebläsegehäuseteilen 1, die entlang einer einzigen axial mittigen Teilungsebene geteilt sind und jeweils eine Hälfte des gesamten Gebläsegehäuses bilden. Beide Gebläsegehäuseteile 1 umfassen jeweils eine axiale Einlassöffnung 2 zur Ansaugung von Gebläseluft, die durch ein Gitterstreben aufweisendes Schutzgitter 12 überdeckt sind. Zusammen bilden die Gehäuseteile 1 eine Ausblasöffnung 22. Entlang des jeweiligen Teilungsrandabschnitts sind an den Gebläsegehäuseteilen 1 Verklipselemente in Form von Verklipshaken 8 und Verklipsösen 7 vorgesehen, über die beide Gebläsegehäuseteile 1 ohne zusätzliche Befestigungselemente wie Schrauben oder dergleichen miteinander lösbar befestigbar sind.

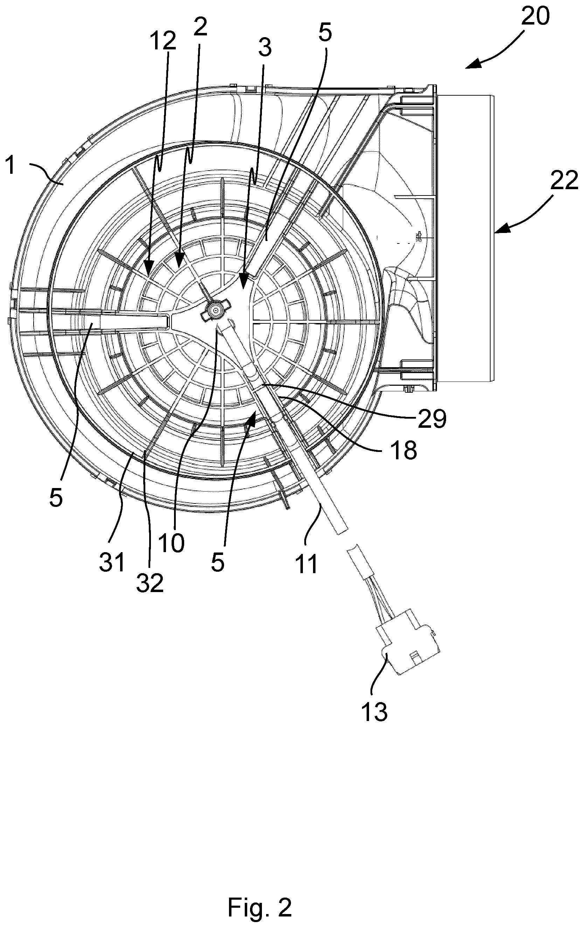

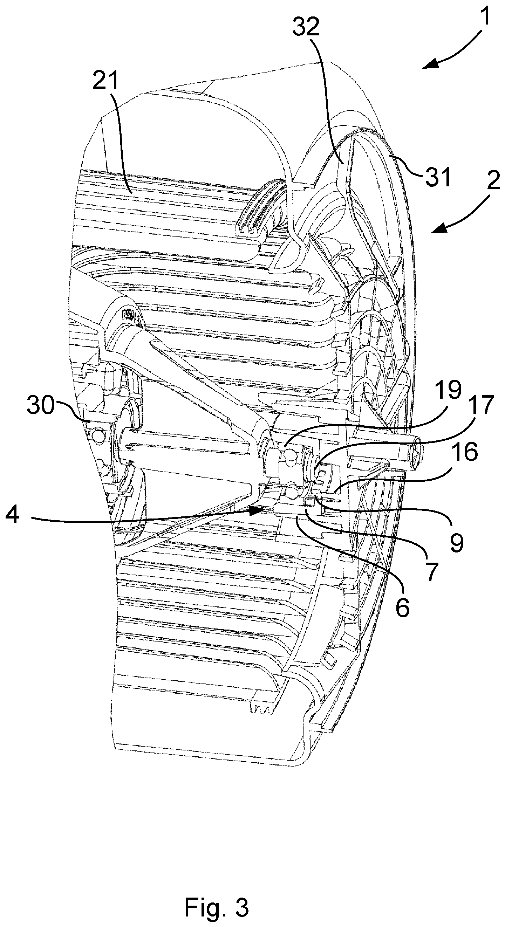

Bezugnehmend auf die Figuren 2 und 3, die eine Seitenansicht auf ein Gebläse mit einem einstückigen Gebläsegehäuseteil 1 aus Figur 1 bzw. eine aufgeschnittene Detailansicht des Gebläsegehäuseteils 1 wiedergeben, ist in der Einlassöffnung 2 eine Lageraufnahme 3 zur Lagerung des nicht im Detail dargestellten Gebläsemotors vorgesehen, die über drei sternförmig im 120°-Winkel zueinander die Einlassöffnung 2 überstreckend verlaufende Stege 5 einteilig an dem Gebläsegehäuseteil 1 gehalten ist. Die Stege verlaufen in derselben Axialebene wie das Schutzgitter 12 und bilden einen integralen Bestandteil des Schutzgitters. Das Schutzgitter 12 überdeckt die Einlassöffnung 2 mit mehreren koaxialen Umfangsstreben und mehreren Radialstreben, wobei zwischen den Streben der Lufteintritt erfolgt. Alle drei Stege 5 weisen seitliche axial nach außen gerichtete Randstege 18 auf, die entlang der Stege 5 einen Kanal erzeugen, wobei in einen der Stege 5 bzw. in den durch die Randstege 18 gebildeten Kanal das Anschlusskabel 11 für den Gebläsemotor eingelegt und in der gezeigten Ausführung durch einen das Kabel 11 überdeckenden Quersteg 29 gehalten ist. Die Randstege 18 und der Quersteg 29 bilden Führungs- und Haltemittel für das Kabel 11. Der Vollständigkeit halber ist an dem Kabel 11 zudem der Anschlussstecker 13 dargestellt.

Im Bereich der Lageraufnahme 3 ist eine axiale Durchgangsöffnung 10 zur Durchführung des Kabels 11 in Richtung des Gebläsemotors ins Innere des Gebläsegehäuses vorgesehen.

Wie in Figur 3 gut zu erkennen, umfasst die Lageraufnahme 3 eine zur Gebläsemotorseite, d.h. zur Innenseite gerichtete offene Lagerbuchse 4 mit konisch zulaufenden Rippen 6 auf. Die Rippen 6 verringern die Querschnittsfläche der Lagerbuchse 4 in axialer Richtung und bieten somit eine Montagehilfe zum leichteren Einsetzen des Motorwellenlagers 19. Bei dem gezeigten Ausführungsbeispiel ist zudem in der Lagerbuchse 4 ein buchsenförmiges Elastomerelement 7 angeordnet, in das das Motorwellenlagers 19 mit der Motorwelle 17 eingesteckt ist. Das buchsenförmige Elastomerelement 7 bildet die Form der Lagerbuchse 4 nach und füllt diese im Wesentlichen vollständig aus. Die konisch zulaufenden Rippen 6 der Lagerbuchse helfen auch, das buchsenförmige Elastomerelement 7 in die Lagerbuchse 4 einzusetzen. Die Motorwelle 17 erstreckt sich axial im Zentrum des Laufrads 21 durch einen axial vorstehenden kegelförmigen Nabenabschnitt und ist von dem ersten Motorwellenlager 19 axial beanstandet durch ein weiteres Motorwellenlager 30 zusätzlich im Nabenbereich des Laufrads 21 gelagert.

Die Lagerbuchse 4 weist Axialrippen 16 auf, die sich in einen von der Lagerbuchse 4 bestimmten Aufnahmeraum hinein erstrecken und einen axialen Toleranzausgleich bilden. In der gezeigten Ausführung sind die Axialrippen 16 als zumindest abschnittsweise umlaufender Ring ausgebildet. Das buchsenförmiges Elastomerelement 7 liegt auf den Axialrippen 16 auf und weist selbst in seinem Aufnahmeraum für das Motorwellenlage 19 axial vorstehende Axialrippen 9 auf, die über den Umfang gleichmäßig verteilt ausgebildet sind und eine Schwingungsentkopplung gewährleisten.

An dem Gebläsegehäuseteil 1 ist außenseitig radial außerhalb der Einlassöffnung 2 ein umlaufender, axial vorstehender Ring 31 ausgebildet, der mit sich von dem Schutzgitter 12 nach radial außen über den radialen Rand der Einlassöffnung 2 hinaus erstreckenden Radialstegen 32 verbunden ist, um das Gebläsegehäuseteil 1 zu versteifen. Dabei steht der Bereich der Lageraufnahme 3 gegenüber einer Axialebene des Teils des Gebläsegehäuseteils 1, in dem der Ring 31 verläuft, axial hervor und schafft zusätzlichen Bauraum für die Lageraufnahme 3 mit der Lagerbuchse 4.

Auch wenn Figur 3 nur ein Gebläsegehäuseteil 1 im Detail zeigt, so ist das zweite Gebläsegehäuseteil 1 entsprechend ausgebildet und bietet mithin eine beidseitige Lagerung des Gebläsemotors in den beiden Gebläsegehäuseteilen 1.

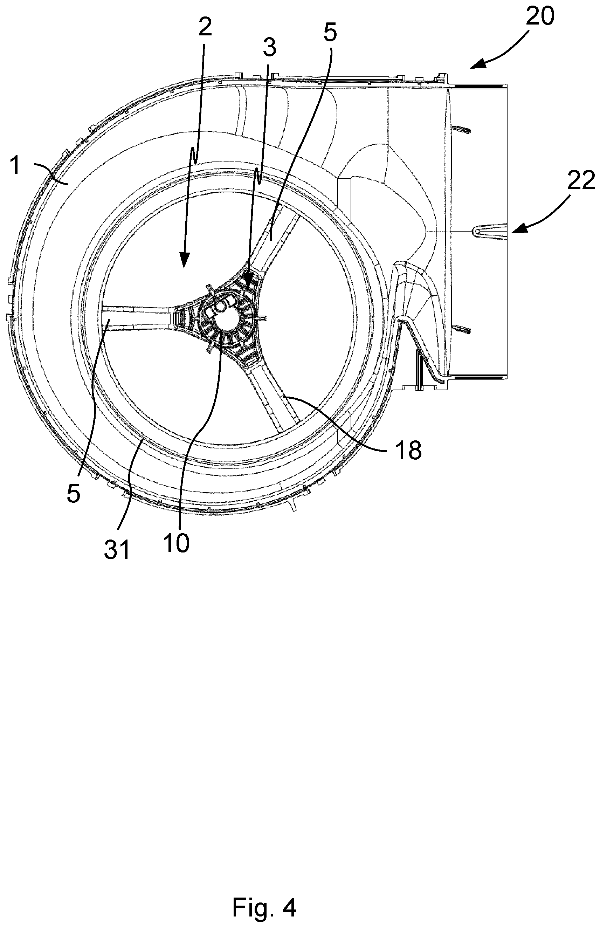

Figur 4 zeigt eine alternative Ausführung des Gebläses 20 zu demjenigen aus Figur 2, wobei die Gebläsegehäuseteile 1 ohne das Schutzgitter 12 ausgebildet sind. Im Übrigen gelten die zu den Figuren 1-3 offenbarten Merkmale identisch auch für die Ausführung gemäß Figur 4, ohne dass diese ausdrücklich wiederholt werden. Auf die Darstellung eines Kabels 11 wurde in dieser Ansicht verzichtet.

## Patentansprüche

1. Gebläse (20) mit einem Gebläsegehäuse, in dem der Gebläsemotor und ein Laufrad (21) aufgenommen sind, wobei das Gebläsegehäuse aus zwei miteinander verbundenen Gebläsegehäuseteilen (1) gebildet ist, wobei die Gebläsegehäuseteile (1) eine Einlassöffnung (2) zur Ansaugung von Gebläseluft und eine in der Einlassöffnung (2) gehaltenen Lageraufnahme (3) zur Lagerung eines Gebläsemotors umfassen, wobei die Lageraufnahme (3) eine zu einer Gebläsemotorseite offene Lagerbuchse (4) aufweist, die ausgebildet ist, zumindest ein Motorwellenlager (19) des Gebläsemotors aufzunehmen, wobei in der Lagerbuchse (4) konisch zulaufende Rippen (6) ausgebildet sind, welche eine Querschnittsfläche eines Aufnahmeraums der Lagerbuchse (4) in axialer Richtung verringern.

2. Gebläse nach dem vorigen Anspruch, **dadurch gekennzeichnet, dass** das Gebläsegehäuse axial mittig in einer Teilungsebene geteilt ist und die zwei Gebläsegehäuseteile (1) jeweils eine Hälfte des Gebläsegehäuses bilden.

3. Gebläse nach dem vorigen Anspruch, **dadurch gekennzeichnet, dass** die zwei Gebläsegehäuseteile (1) ineinander greifende Befestigungsmittel aufweisen.

4. Gebläse nach dem vorigen Anspruch, **dadurch gekennzeichnet, dass** die Befestigungsmittel durch ineinander greifende Verklipselemente (7, 8) ausgebildet sind.

5. Gebläse nach einem der vorigen Ansprüche, **dadurch gekennzeichnet, dass** die Lageraufnahme (3) des ersten der zwei Gebläsegehäuseteile (1) eine Lagerung des Motorwellenlagers (19) des Gebläsemotors und die Lageraufnahmen (3) des zweiten der zwei Gebläsegehäuseteile (1) eine Lagerung und Abstützung des Gebläsemotors aufweist.

6. Gebläse nach einem der vorigen Ansprüche, **dadurch gekennzeichnet, dass** die Lageraufnahme (3) über sternförmig die Einlassöffnung (2) überstreckend verlaufende Stege (5) einteilig an dem Gebläsegehäuseteil (1) gehalten ist.

7. Gebläse nach einem der vorigen Ansprüche, **dadurch gekennzeichnet, dass** die Lagerbuchse (4) Axialrippen (16) aufweist, die sich in einen/den von der Lagerbuchse (4) bestimmten Aufnahmeraum hinein erstrecken und einen axialen Toleranzausgleich bilden.

8. Gebläse nach einem der vorigen Ansprüche, **dadurch gekennzeichnet, dass** in der Lagerbuchse (4) ein buchsenförmiges Elastomerelement (7) angeordnet ist, das ausgebildet ist, das zumindest eine Motorwellenlager (19) des Gebläsemotors aufzunehmen.

9. Gebläse nach dem vorigen Anspruch, **dadurch gekennzeichnet, dass** das buchsenförmige Elastomerelement (7) Axialrippen (9) aufweist, die sich in einen von dem Elastomerelement (7) bestimmten Aufnahmeraum hinein erstrecken.

10. Gebläse nach einem der vorigen Ansprüche, **dadurch gekennzeichnet, dass** das buchsenförmige Elastomerelement (7) die Lagerbuchse (4) vollständig ausfüllt.

11. Gebläse nach einem der vorigen Ansprüche, **dadurch gekennzeichnet, dass** in die Lageraufnahme (3) eine axiale Durchgangsöffnung (10) zur Durchführung eines Kabels (11) in Richtung des Gebläsemotors aufweist.

12. Gebläse nach einem der vorigen Ansprüche 6 bis 11, **dadurch gekennzeichnet, dass** zumindest einer der Stege (5) Führungsmittel zum Führen eines Kabels (11) aufweisen.

13. Gebläse nach einem der vorigen Ansprüche 6 bis 12, **dadurch gekennzeichnet, dass** zumindest einer der Stege (5) Haltemittel zum Festlegen eines Kabels (11) aufweisen.

14. Gebläse nach einem der vorigen Ansprüche, **dadurch gekennzeichnet, dass** es ein einstückig an dem Gebläsegehäuseteil (1) ausgebildetes Schutzgitter (12) mit Gitterstreben aufweist, welche die Einlassöffnung (2) überstrecken.

## Claims

1. A blower (20) with a blower housing in which the blower motor and an impeller (21) are accommodated, wherein the blower housing is formed by two interconnected blower housing parts (1), wherein the blower housing parts (1) have an inlet opening (2) for sucking in blower air and a bearing receptacle (3) that is held in the inlet opening (2) for the purpose of supporting a blower motor, wherein the bearing receptacle (3) has a bearing bushing (4) that is open to a blower motor side and is designed to accommodate at least one motor shaft bearing (19) of the blower motor, and wherein conically tapering ribs (6) are formed in the bearing bush (4) which reduce a cross-sectional area of a receiving space of the bearing bush (4) in the axial direction.

2. The blower according to the preceding claim, **characterized in that** the blower housing is divided axially in the middle in a dividing plane, and the two blower housing parts (1) each form half of the blower housing.

3. The blower according to the preceding claim, **characterized in that** the two blower housing parts (1) have interlocking fastening means.

4. The blower according to the preceding claim, **characterized in that** the fastening means are formed by interlocking snap-fit elements (7, 8).

5. The blower according to any one of the preceding claims, **characterized in that** the bearing support (3) of the first of the two blower housing parts (1) has a support for the motor shaft bearing (19) of the blower motor, and the bearing support (3) of the second of the two blower housing parts (1) has a support and a bracing for the blower motor.

6. The blower according to one of the preceding claims, **characterized in that** the bearing support (3) is held in one piece on the blower housing part (1) by means of webs (5) that extend over the inlet opening (2) in the shape of a star.

7. The blower according to one of the preceding claims, **characterized in that** the bearing bush (4) has axial ribs (16) which extend into a/the accommodating space defined by the bearing bush (4) and form an axial tolerance compensation.

8. The blower according to one of the preceding claims, **characterized in that** a bush-shaped elastomer element (7) that is designed to accommodate the at least one motor shaft bearing (19) of the blower motor is arranged in the bearing bush (4).

9. The blower according to the preceding claim, **characterized in that** the bush-shaped elastomeric element (7) has axial ribs (9) which extend into an accommodating space defined by the elastomeric element (7).

10. The blower according to one of preceding claims, **characterized in that** the bush-shaped elastomeric element (7) completely fills the bearing bush (4).

11. The blower according to one of the preceding claims, **characterized in that** the bearing support (3) has an axial passage opening (10) for passing a cable (11) in the direction of the blower motor.

12. The blower according to one of preceding claims 6 to 11, **characterized in that** at least one of the webs (5) has guide means for guiding a cable (11).

13. The blower according to one of preceding claims 6 to 12, **characterized in that** at least one of the webs (5) has holding means for fixing a cable (11).

14. The blower according to one of the preceding claims, **characterized in that** it has a protective grid (12) with grid struts that is integrally formed on the blower housing part (1), the grid struts extending over the inlet opening (2).

## Revendications

1. Ventilateur (20) comprenant un boîtier de ventilateur dans lequel le moteur de ventilateur et un rotor (21) sont reçus, le boîtier de ventilateur étant formé par deux parties de boîtier de ventilateur (1) reliées l'une à l'autre, les parties de boîtier de ventilateur (1) comprenant une ouverture d'admission (2) pour aspirer l'air de ventilateur et un logement de palier (3) retenu dans l'ouverture d'admission (2) pour loger un moteur de ventilateur, le logement de palier (3) présentant un coussinet (4) ouvert vers un côté moteur de ventilateur et qui est réalisée pour recevoir au moins un palier d'arbre moteur (19) du moteur de ventilateur, des nervures (6) se terminant en cône étant réalisées dans le coussinet (4) et diminuant une superficie de la section d'un espace de réception du coussinet (4) dans la direction axiale.

2. Ventilateur selon la revendication précédente, **caractérisé en ce que** le boîtier de ventilateur est séparé axialement au milieu dans un plan de séparation, et les deux parties de boîtier de ventilateur (1) constituent respectivement une moitié du boîtier de ventilateur.

3. Ventilateur selon la revendication précédente, **caractérisé en ce que** les deux parties de boîtier de ventilateur (1) présentent des moyens de fixation venant en prise les uns dans les autres

4. Ventilateur selon la revendication précédente, **caractérisé en ce que** les moyens de fixation sont réalisés par des éléments d'encliquetage (7, 8) venant en prise les uns dans les autres.

5. Ventilateur selon l'une quelconque des revendications précédentes, **caractérisé en ce que** le logement de palier (3) de la première des deux parties de boîtier de ventilateur (1) présente une disposition de palier du palier d'arbre moteur (19) du moteur de ventilateur, et les logements de palier (3) de la deuxième des deux parties de boîtier de ventilateur (1) présentent une disposition de palier et un appui du moteur de ventilateur

6. Ventilateur selon l'une quelconque des revendications précédentes, **caractérisé en ce que** le logement de palier (3) est retenu d'un seul tenant au niveau de la partie de boîtier de ventilateur (1) par l'intermédiaire d'entretoises (5) s'étendant en couvrant l'ouverture d'admission (2) en forme d'étoile.

7. Ventilateur selon l'une quelconque des revendications précédentes, **caractérisé en ce que** le coussinet (4) présente des nervures axiales (16) qui s'étendent dans un ou ledit espace de réception déterminé par le coussinet (4) et forment une compensation de tolérance axiale.

8. Ventilateur selon l'une quelconque des revendications précédentes, **caractérisé en ce qu'**un élément élastomère (7) en forme de douille est disposé dans le coussinet (4), qui est réalisé pour recevoir ledit au moins un palier d'arbre moteur (19) du moteur de ventilateur.

9. Ventilateur selon la revendication précédente, **caractérisé en ce que** l'élément élastomère (7) en forme de douille présente des nervures axiales (9) qui s'étendent dans un espace de réception déterminé par l'élément élastomère (7).

10. Ventilateur selon l'une quelconque des revendications précédentes, **caractérisé en ce que** l'élément élastomère (7) en forme de douille remplit complètement le coussinet (4).

11. Ventilateur selon l'une quelconque des revendications précédentes, **caractérisé en ce que** le logement de palier (3) présente une ouverture de passage axiale (10) pour le passage d'un câble (11) en direction du moteur de ventilateur.

12. Ventilateur selon l'une quelconque des revendications précédentes 6 à 11, **caractérisé en ce qu'**au moins l'une des entretoises (5) présente des moyens de guidage pour guider un câble (11).

13. Ventilateur selon l'une quelconque des revendications précédentes 6 à 12, **caractérisé en ce qu'**au moins l'une des entretoises (5) présente des moyens de retenue pour immobiliser un câble (11),

14. Ventilateur selon l'une quelconque des revendications précédentes, **caractérisé en ce qu'**il présente une grille de protection (12) réalisée d'un seul tenant au niveau de la partie de boîtier de ventilateur (1) et dotée de barrettes de grille qui couvrent l'ouverture d'admission (2).
